# EUROPÄISCHE PATENTSCHRIFT

(11) **EP 2 477 913 B1**
(45) Veröffentlichungstag und Bekanntmachung des Hinweises auf die Patenterteilung: **20.11.2013**
(21) Anmeldenummer: 10775697.5
(22) Anmeldetag: 07.09.2010
(51) Int. Cl.: B65G 1/04

(54) **VERFAHREN UND SYSTEM ZUM EIN- UND AUSLAGERN VON BEHÄLTERN IN EIN ODER AUS EINEM LAGERREGAL MITTELS SATELLITENFAHRZEUG**
METHOD AND SYSTEM FOR STORING AND RETRIEVING CONTAINERS IN OR FROM A STORAGE RACK BY MEANS OF A SATELLITE VEHICLE
PROCÉDÉ ET SYSTÈME PERMETTANT DE STOCKER DES CONTENEURS DANS UN RAYONNAGE ET DE LES EXTRAIRE DE CE DERNIER AU MOYEN D'UN CHARIOT SATELLITE

(30) Priorität: 15.09.2009 DE 102009041590
(43) Veröffentlichungstag der Anmeldung: 25.07.2012
(73) Patentinhaber: Knapp AG, 8075 Hart bei Graz (AT)
(72) Erfinder: KOHOLKA, Roland, A-8502 Lannach (AT)
(74) Vertreter: Hanke, Hilmar
(86) Internationale Anmeldenummer: PCT/EP2010/005472
(87) Internationale Veröffentlichungsnummer: WO 2011/032654

(56) Entgegenhaltungen:
- WO-A2-2008/152244
- DE-U1-202005 013 672
- US-A1- 2005 095 095

## Beschreibung

Die Erfindung betrifft ein Verfahren und ein System zum Ein- und Auslagern von Behältern (worunter nicht nur speziell Behälter, sondern auch Kartons, Tablare, sonstige Gebinde, etc. gemeint sind) in ein oder aus einem Lagerregal mit übereinander angeordneten Lagerregalebenen, in denen die Behälter über Einebenenregalbediengeräte in Form von schienengebundenen angetriebenen autonomen Satellitenfahrzeugen ein- und auslagerbar und von und zu einem Lift vorzugsweise in einer Lagerregalgasse horizontal verfahrbar sowie samt Satellitenfahrzeug im Lift auf zumindest eine Fördertechnikebene im Bereich des Lagerregals vertikal versetzbar sind, wobei die auf der Fördertechnikebene an- und abgeförderten Behälter auf die Satellitenfahrzeuge in Höhe der Fördertechnikebene beladen und entladen werden.

Es gibt nach dem Stand der Technik Shuttle-Systeme, bei denen die Shuttles bzw. Einebenen-Regalbedienfahrzeuge, auch Satellitenfahrzeuge genannt, nicht einer bestimmten Lagerregalebene zugeordnet sind. Diese Systeme verwenden einen Lift, der stirnseitig am Lagerregal vorzugsweise am Ende einer Lagerregalgasse eines Doppel-Lagerregals montiert ist, um die Satellitenfahrzeuge zu den entsprechenden Lagerregalebenen zu bringen und von dort wieder abzuholen.

Eine spezielle Ebene ist hierbei die Fördertechnikebene. Auf dieser Ebene wird der ein- oder auszulagernde Behälter mittels des Lastaufnahmemittels des Satellitenfahrzeugs von der Fördertechnik übernommen bzw. auf die Fördertechnik abgegeben. Das Satellitenfahrzeug ist aus Gründen der Mobilität und eines geringem Energiebedarfs für einen Transport ein insgesamt einfaches leichtgewichtiges verfahrbares selbstangetriebenes Bauteil, dessen nicht höhenverstellbares Lastaufnahmemittel ebenfalls leichtgewichtig ist und einfache Behälterhandhabungs-Mittel wie zum Beispiel Teleskope für ein Ein- und Auslagern im Lagerregal und auf Höhe der Fördertechnikebene aufweist.

Die Leistung der Shuttle-Systeme ist skalierbar mit der Anzahl der Shuttles bzw. Satellitenfahrzeuge. Durchsatzbegrenzend für das Gesamtsystem ist die Leistung des Liftes, da die Anzahl der parallel arbeitenden Shuttles, und damit der Durchsatz der Ebenen, je nach Regallänge und Ebenenanzahl, angepasst werden kann. Die Behälterwechselzeit auf der Fördertechnikebene ist ein wichtiger Anteil an der Liftzykluszeit. Um den Durchsatz zu erhöhen, muss erreicht werden, dass die Ent- und Beladung des Shuttles auf der Fördertechnikebene schnell erfolgt, damit der Durchsatz des Liftes erhöht werden kann. Um dieses Ziel, d.h. ein schnelleres Ent- und Beladen eines Shuttles zu erreichen, müssen nach dem Stand der Technik Mechanik und Antrieb des Lastaufnahmemittels des mobilen Shuttles schneller und damit stärker ausgelegt werden. Da das Lastaufnahmemittel auf jedem Shuttle notwendig ist und einen erheblichen Anteil an den Kosten und am Gewicht des Shuttles hat, ist es nicht einfach möglich, die Lade- und Entladezeiten beliebig zu verringern.

Ein Verfahren und ein System gemäß den Oberbegriffen der Ansprüche 1 und 3 sind aus der WO 2008/152 244 A2 bekannt.

Ausgehend vom vorgenannten Stand der Technik ist es Aufgabe der Erfindung, bei einem Verfahren und Satellitenfahrzeug-System der eingangs genannten Art eine geringe Belade- und Entladezeit eines Satellitenfahrzeugs auf der Fördertechnikebene mit einfachen Mitteln einzurichten, ohne die Mobilität und den Energiebedarf des Satellitenfahrzeugs zu beeinträchtigen.

Gelöst wird die der Erfindung zugrundeliegende Aufgabe durch ein Verfahren mit den Merkmalen nach Anspruch 1, vorteilhaft weitergebildet durch die Merkmale nach Anspruch 2, sowie durch ein System mit den Merkmalen nach Anspruch 3, vorteilhaft weitergebildet durch die Merkmale nach den Ansprüchen 4 bis 7.

Wesen des Verfahrens gemäß der Erfindung ist u.a., dass in Höhe der Fördertechnikebene die Be- und Entladung des Satellitenfahrzeugs eine außerhalb des Satellitenfahrzeugs angeordnete vorzugsweise stationäre Be- und Entladevorrichtung übernimmt.

Erfindungsgemäß erfolgt in Höhe der Fördertechnikebene die Beladung des angeförderten Behälters und die Entladung des abzufördernden Behälters auf das bzw. vom Satellitenfahrzeug zeitgleich. Dadurch ergeben sich besonders kurze Behälterwechselzeiten.

Sind mehrere übereinander angeordnete Fördertechnikebenen im System vorhanden, kann gegebenenfalls die erfindungsgemäße Be- und Entladevorrichtung von einer Fördertechnikebene zu einer anderen Fördertechnikebene vorzugsweise im bereits vorhandenen Lift vertikal versetzt oder auf anderer Strecke verfahren werden.

Ein System gemäß der Erfindung kennzeichnet sich insbesondere dadurch, dass die außerhalb des Satellitenfahrzeugs in Höhe der Fördertechnikebene gelegene Be- und Entladevorrichtung zum Be- und Entladen des Satellitenfahrzeugs fest auf der Fördertechnikebene oder fest auf der Liftplattform des Lifts befestigt ist.

Hierbei kann - sofern mehrere Fördertechnikebenen vorhanden - vorzugsweise die stationäre Be- und Entladevorrichtung von der Fördertechnikebene gelöst und gegebenenfalls zu einer anderen Fördertechnikebene verfahren oder vertikal versetzt werden, bevor sie dort wieder fixiert bzw. arretiert wird. Ist die Be- und Entladevorrichtung bereits auf der Liftplattform fest montiert, genügt ein einfaches Vertikalversetzen der Liftplattform, um die Be- und Entladevorrichtung von einer Fördertechnikebene in eine andere Fördertechnikebene zu transportieren.

Die vorzugsweise stationäre Be- und Entladevorrichtung weist erfindungsgemäß einen verstellbaren ersten Querschieber zum Beladen des Satellitenfahrzeugs mit einem positionierten Behälter auf, der auf einem ersten Förderer auf der Fördertechnikebene anförderbar ist.

Entsprechend weist die vorzugsweise stationäre Be- und Entladevorrichtung einen verstellbaren zweiten Querschieber zum Entladen eines positionierten Behälters vom Satellitenfahrzeug zeitgleich zum Beladen eines neuen angeförderten Behälters auf, wobei der entladene Behälter auf einem zweiten Förderer auf der Fördertechnikebene abförderbar ist.

Erfindungsgemäß ist für ein zeitgleiches Be- und Entladen der erste und der zweite Querschieber als ein einziger Doppelschieber ausgebildet.

Besonders vorteilhaft ist es, wenn das Satellitenfahrzeug ein Lastaufnahmemittel mit angetriebener Rollenfördertechnik aufweist, welche gegebenenfalls das Be- und Entladen des Satellitenfahrzeugs in Höhe der Fördertechnikebene unterstützt.

Das Satellitenfahrzeug kann ein Lastaufnahmemittel mit zumindest einem Teleskoparm für ein Ein- und Auslagern eines Behälters in ein oder aus einem in einer Lagerregalebene des Lagerregals gelegenen Lagerfach aufweisen, wobei der oder die Teleskoparme auch die Entladung eines abzufördernden Behälters vom Satellitenfahrzeug in Höhe der Fördertechnikebene unterstützt oder übernehmen kann, wenn das Satellitenfahrzeug nicht mit einem neuen Behälter beladen wird.

Um die Belade bzw. Entladezeit auf der Fördertechnikebene zu optimieren, wird somit eine Vorrichtung erfindungsgemäß vorgeschlagen, welche die Be- und Entladung des mobilen Shuttles übernimmt.

Dadurch kann das Shuttle so billig und so leicht wie möglich ausgeführt werden, da die zeitkritische Operation des Behälterwechsels auf Höhe der Fördertechnikebene nicht vom Shuttle selbst, allenfalls nur unter teilweiser Beteiligung des Shuttles, durchgeführt wird, vielmehr von einer separaten stationären Be- und Entladevorrichtung, die leistungsstärker und größer gebaut werden kann, da sie nicht zu den bewegten und beschleunigten Massen des Shuttles zählt, wodurch sich besonders schnelle Behälterwechsel einrichten lassen bzw. besonders kurze Behälterwechselzeiten ergeben.

Weitere Vorteile und Einzelheiten der Erfindung werden nachfolgend anhand von Ausführungsbeispielen unter Bezugnahme auf die beigefügten Zeichnungen näher beschrieben; es zeigen:
- Figuren 1 bis 7: ein nicht zur Erfindung gehörendes System zum Ein- und Auslagern von Behältern in ein und aus einem Lagerregal mittels Satellitenfahrzeug mit einer erfindungsgemäßen Be- und Entladevorrichtung in einer ersten Ausführungsvariante, und zwar in verschiedenen Ablaufstellungen während eines Ein- und Auslagerns in das oder aus dem Lagerregal mit einem Be- und Entladen von Behältern auf ein Satellitenfahrzeug in einer Fördertechnikebene und,
- Figuren 8 bis 17: entsprechende Ablaufstellungen eines erfindungsgemäßen Systems.

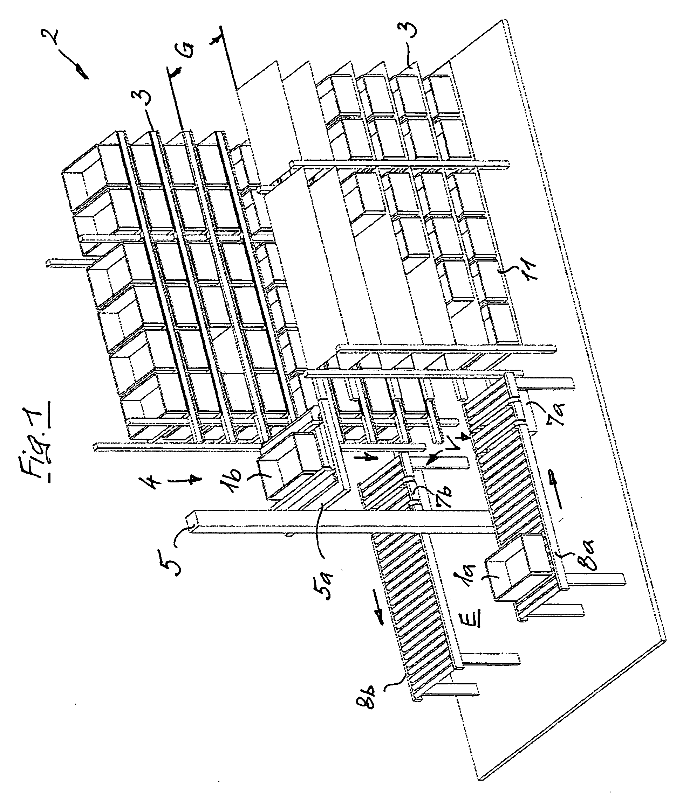

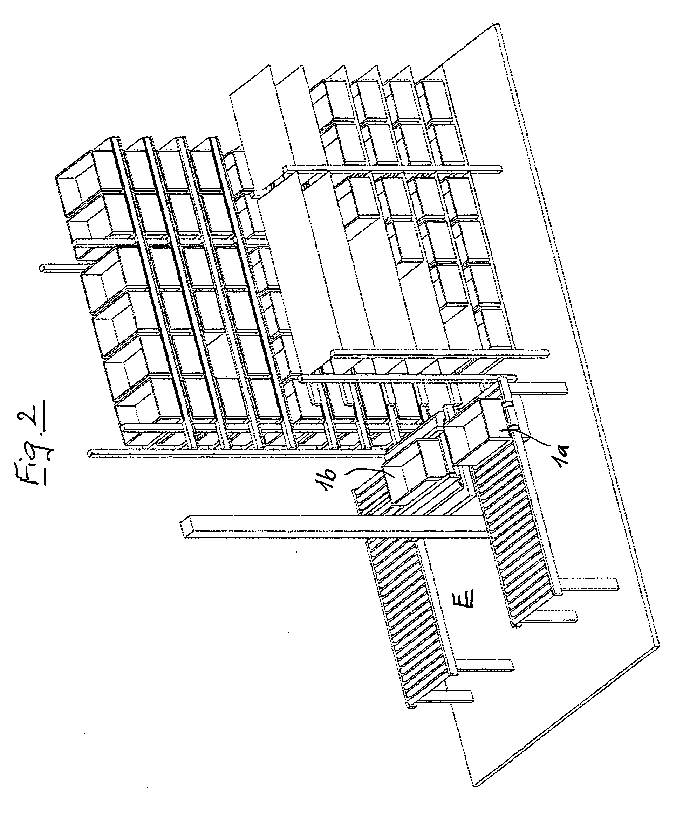

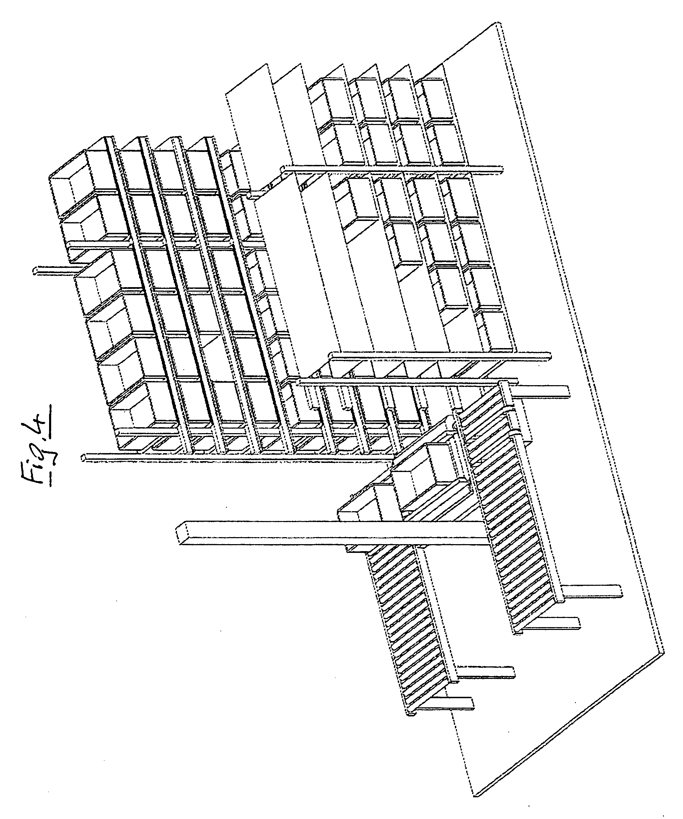

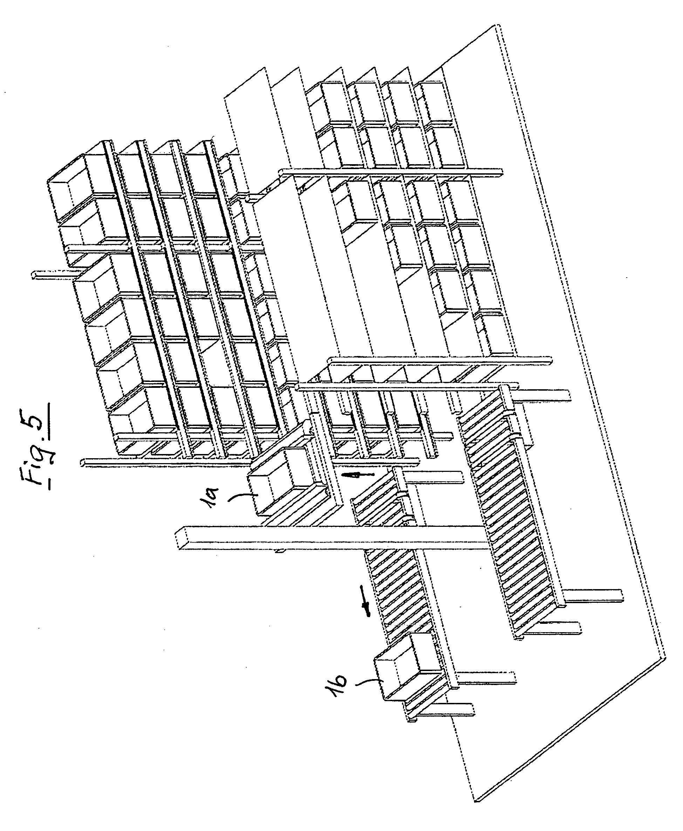

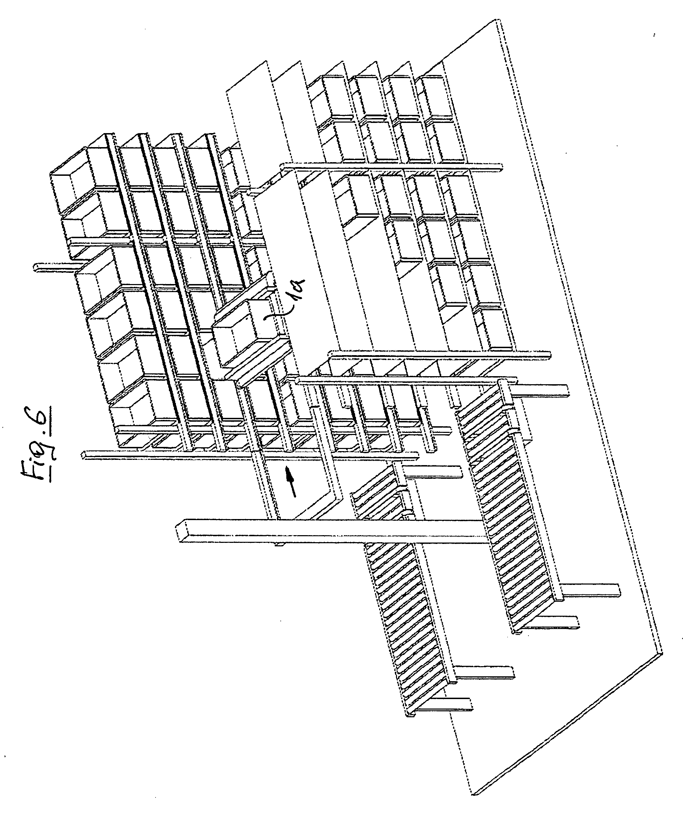

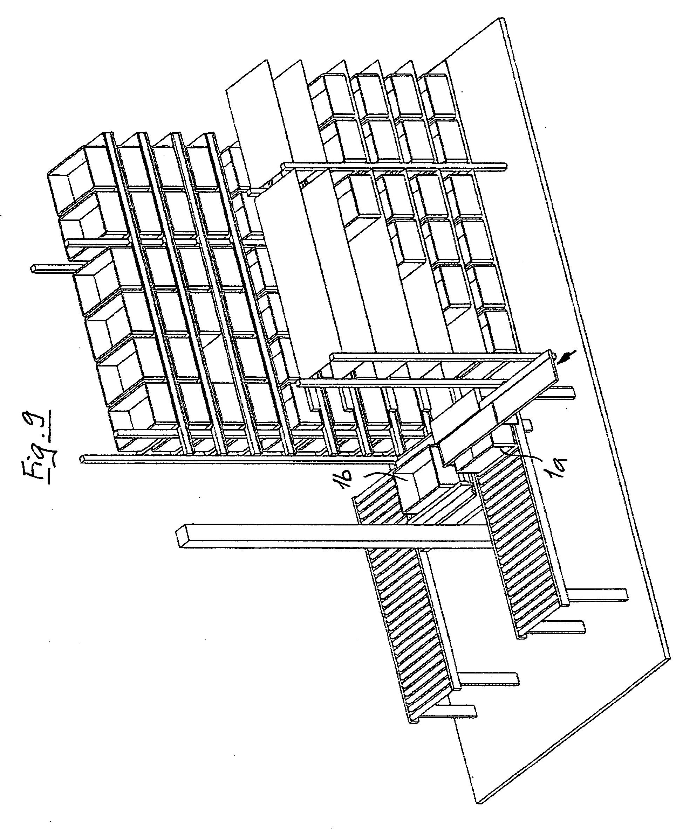

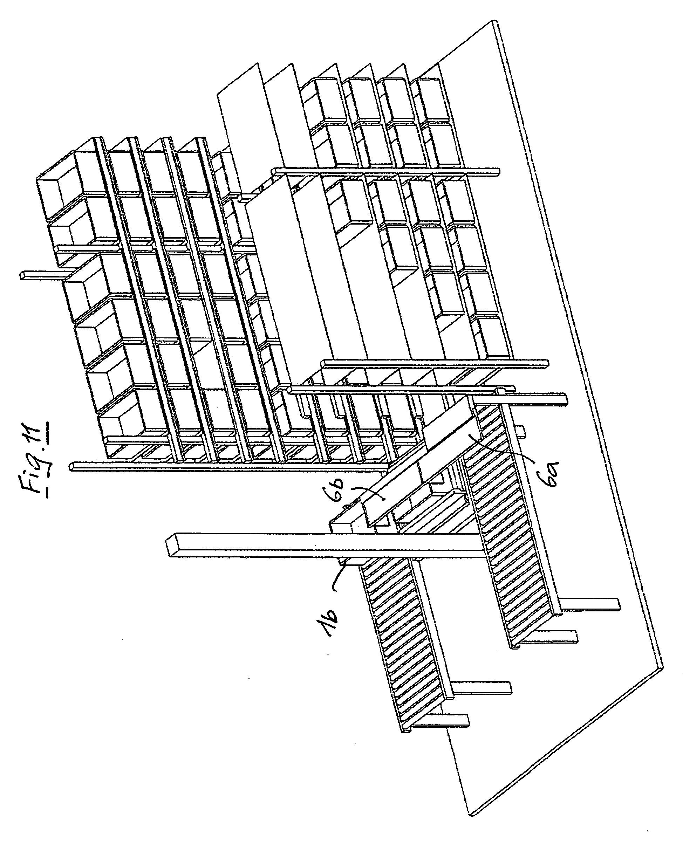

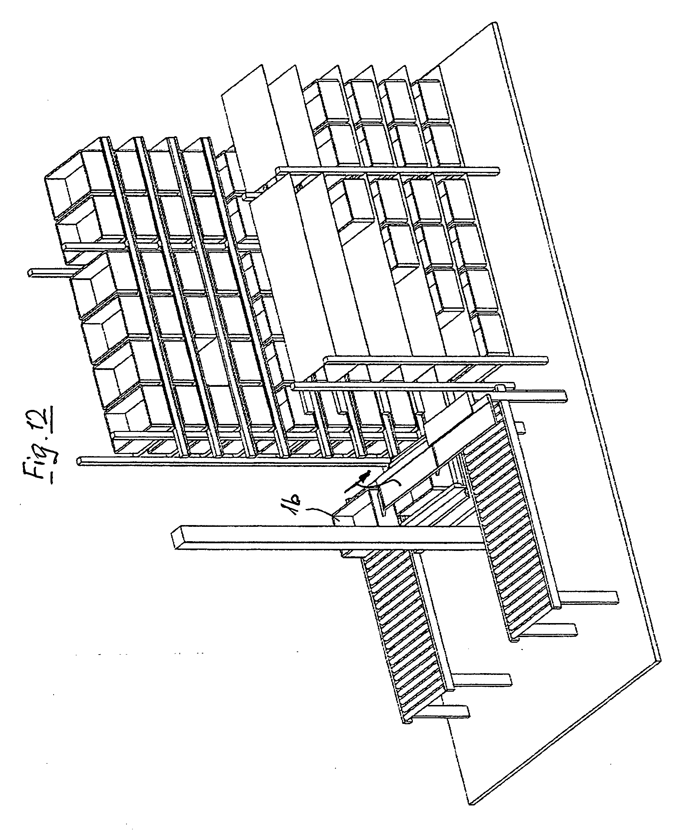

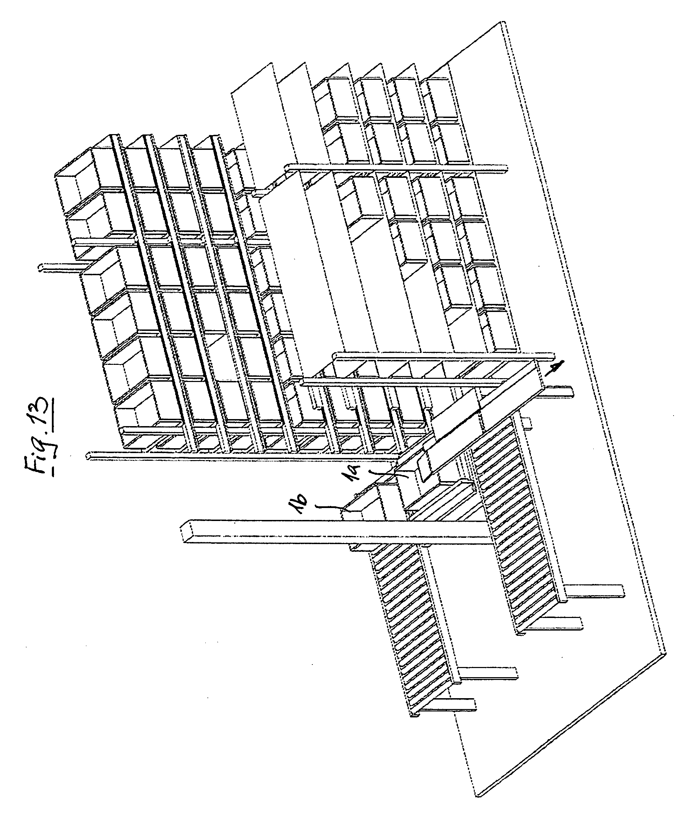

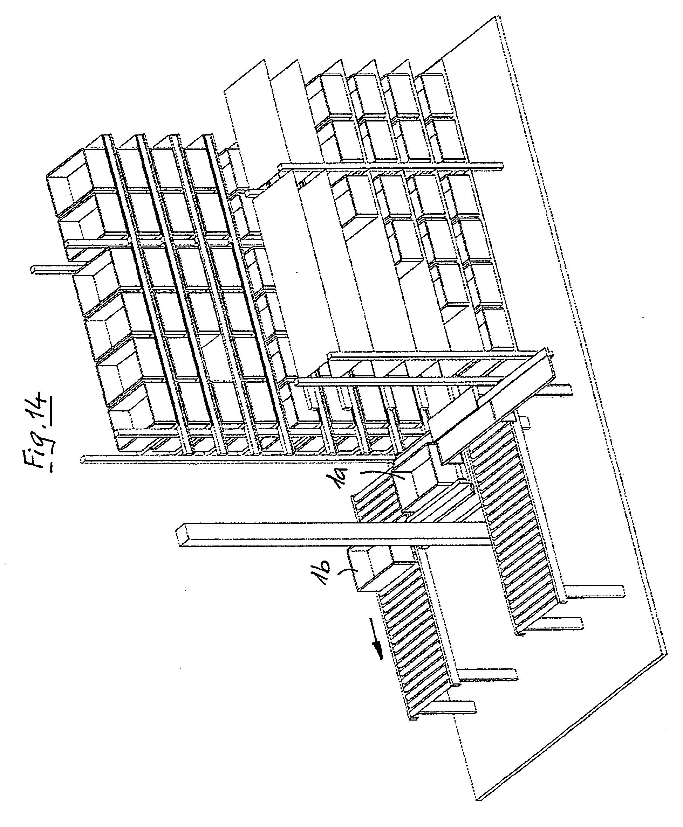

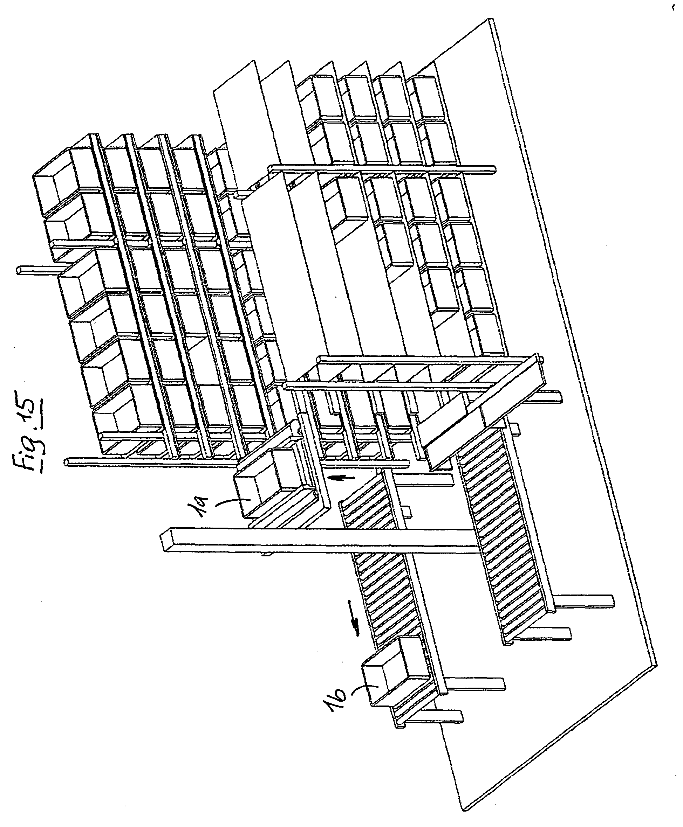

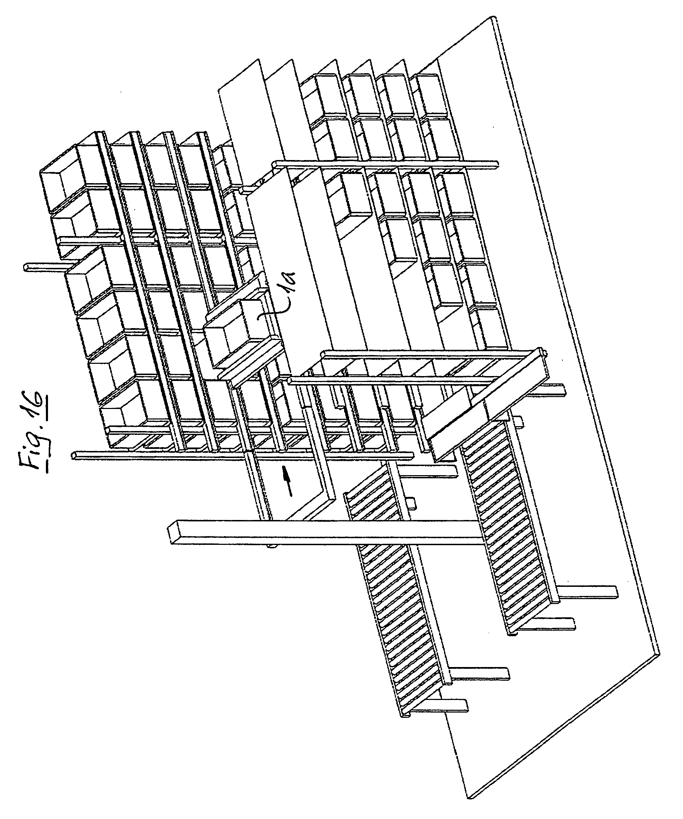

In den Figuren 1 bis 7 und den Figuren 8 bis 17 sind zwei Ausführungsvarianten eines Systems zum Ein- und Auslagern von Behältern 1a, 1b in ein oder aus einem Lagerregal 2 mit übereinander angeordneten Lagerregalebenen 3 dargestellt, in denen die Behälter über Einebenenregalbediengeräte in Form von schienengebundenen angetriebenen autonomen Satellitenfahrzeugen 4 ein- und auslagerbar und von und zu einem Lift 5 in einer Lagerregalgasse G horizontal verfahrbar sowie samt Satellitenfahrzeug im Lift auf eine Fördertechnikebene E im Bereich des Lagerregals vertikal versetzbar sind, wobei die auf der Fördertechnikebene an- und abgeförderten Behälter 1a, 1b auf die Satellitenfahrzeuge 4 in Höhe der Fördertechnikebene E beladen und entladen werden.

Das Lagerregal 2 ist als Doppelregal bestehend aus zwei voneinander beabstandeten Einzelregalen ausgebildet, zwischen denen die Lagerregalgasse G verläuft. Jedes Einzelregal besitzt übereinander angeordnete Lagerregalebenen 3 in gleicher Höhe mit jeweils nebeneinander liegenden Lagerfächern 11, in denen jeweils ein Behälter gelagert werden kann.

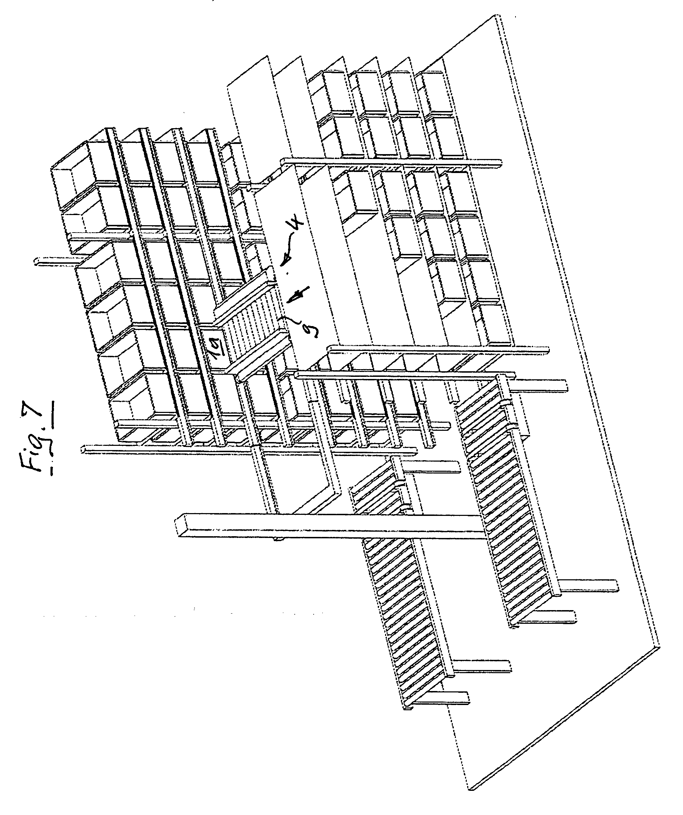

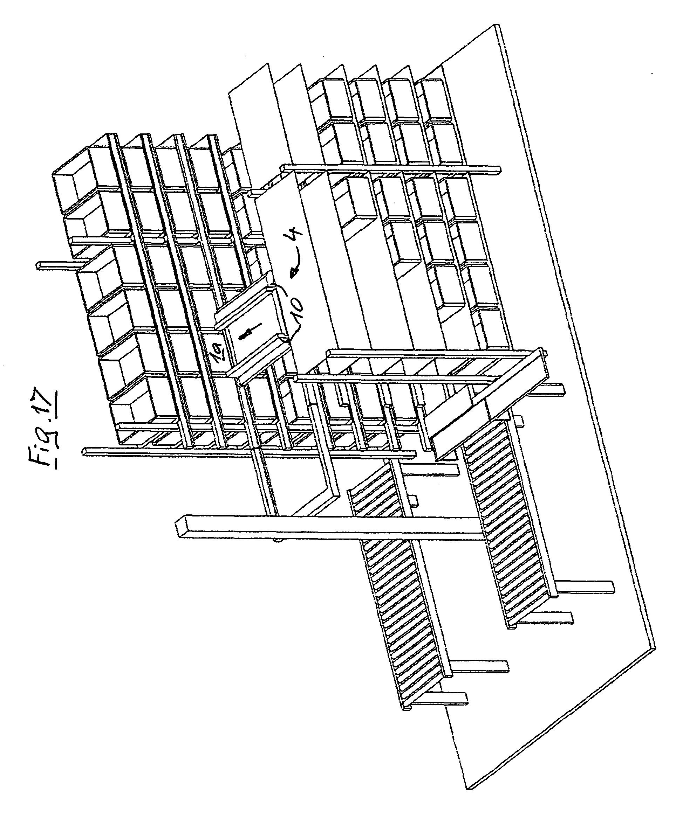

Die Ein- und Auslagerung erfolgt in bekannter Weise beispielsweise mittels angetriebener Rollenfördertechnik 9 in der ersten Ausführungsvariante mit Bezug speziell auf Figur 7 oder mittels seitlicher Teleskoparme 10 in der zweiten Ausführungsvariante mit Bezug speziell auf Figur 17, welche jeweils auf einem Lastaufnahmemittel des Satellitenfahrzeugs 4 vorgesehen ist.

Am in den Zeichnungen links gezeigten Ende der Lagerregalgasse G befindet sich in beiden Ausführungsvarianten der Lift 5, auf dessen Liftplattform 5a jeweils ein Satellitenfahrzeug des Systems nebst Behälter 1a, 1b vertikal zwischen jeder Lagerregalebene 3 und der horizontalen Fördertechnikebene E transportierbar ist.

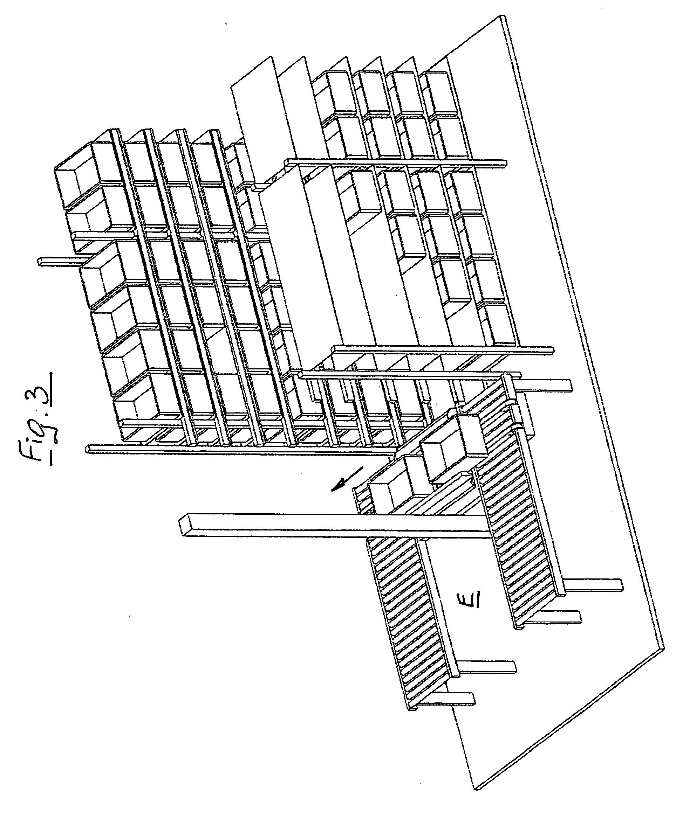

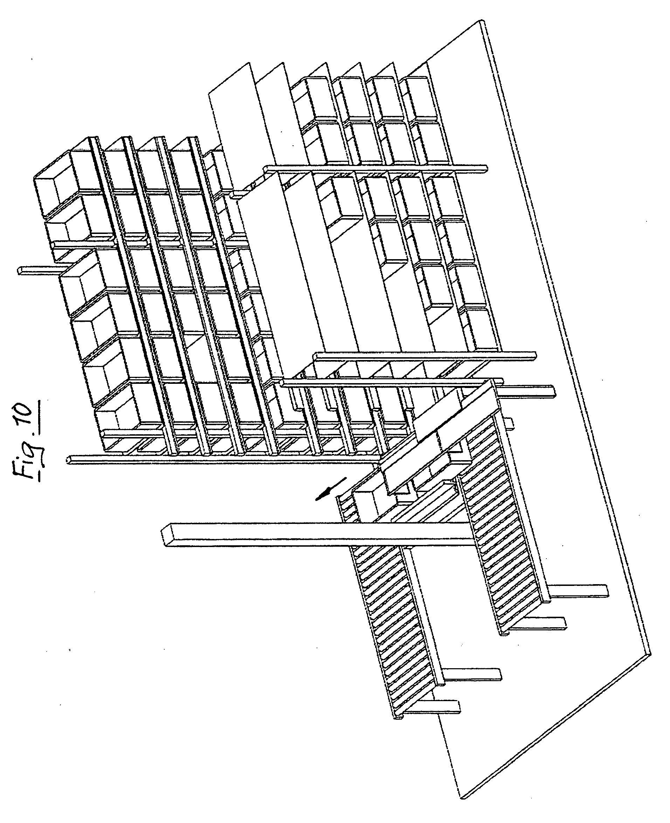

Auf der horizontalen Fördertechnikebene E befinden sich ein erster Förderer 8a und ein zweiter Förderer 8b in bekannter Rollenfördertechnik, die beide parallel zueinander verlaufen und voneinander beabstandet sind. Der erste Förderer 8a erstreckt sich unmittelbar in der Verlängerung des in den Zeichnungen gelegenen vorderen Einzelregals des Lagerregals 2 und der zweite Förderer 8b unmittelbar in der Verlängerung des in den Zeichnungen gelegenen hinteren Einzelregals. Der Abstand zwischen dem ersten und zweiten Förderer 8a, 8b entspricht der Breite der Liftplattform 5a des Lifts 5, die in ihrer unteren Stellung einen fluchtenden unmittelbaren Übergang zwischen dem Lastaufnahmemittel des Satellitenfahrzeugs und den beiden gemäß Zeichnungen rechten Enden der Förderer 8a und 8b herstellt, so dass ein auf dem Lastaufnahmemittel des Satellitenfahrzeugs abgestellter Behälter 1b durch Behälterhandhabungsmittel für eine Auslagerung auf dem zweiten Förderer 8b in Pfeilrichtung abtransportiert und ein auf dem ersten Förderer 8a in Pfeilrichtung angeförderter Behälter 1a in der positionierten gemäß Zeichnungen rechten Endstellung auf das leere Lastaufnahmemittel des Satellitenfahrzeugs, insbesondere mit Bezug auf Figur 3 in der ersten Ausführungsvariante und insbesondere mit Bezug auf Figur 10 in der zweiten Ausführungsvariante, aufgeschoben werden kann.

Die Behälterhandhabungsmittel befinden sich nach dem Stand der Technik auf dem Satellitenfahrzeug, die ein Auf- und Abschieben der Behälter in Höhe der Fördertechnikebene E ermöglichen.

Kern der Erfindung ist, dass das vorgenannte Auf- und Abschieben der Behälter bzw. die Be- und Entladung des Satellitenfahrzeugs 4 in Höhe der Fördertechnikebene E eine außerhalb des Satellitenfahrzeugs 4 angeordnete stationäre Be- und Entladevorrichtung V übernimmt, die leistungsstärker und größer als die bekannten Behälterhandhabungsmittel der Satellitenfahrzeuge gebaut werden kann, da sie nicht zu den bewegten und beschleunigten Massen des Satellitenfahrzeugs zählt und spezialisiert für den reinen Behälterwechsel ausgelegt werden kann, wodurch sich besonders schnelle Behälterwechsel einrichten lassen bzw. besonders kurze Behälterwechselzeiten ergeben.

Die Be- und Entladevorrichtung V ist auf der Fördertechnikebene E befestigt, die in den Zeichnungen symbolisch durch E mit Unterstreichung dargestellt ist.

Für Anwendungen mit mehreren Fördertechnikebenen kann die Be- und Entladevorrichtung V auch auf der Liftplattform 5a befestigt sein oder zwischen den Fördertechnikebenen verfahren werden.

In der in den Figuren 1 bis 7 dargestellten nicht zur Erfindung gehörenden ersten Ausführungsvariante ist die Be- und Entladevorrichtung V ein erster und ein zweiter Gurtumsetzer 7a, 7b, die jeweils im ersten und zweiten Förderer 8a, 8b endseitig integriert sind und eine Querversetzung eines auf dem Gurtumsetzer platzierten Behälters zusammen mit der Rollenfördertechnik 9 des Lastaufnahmemittels des Satellitenfahrzeugs ermöglichen.

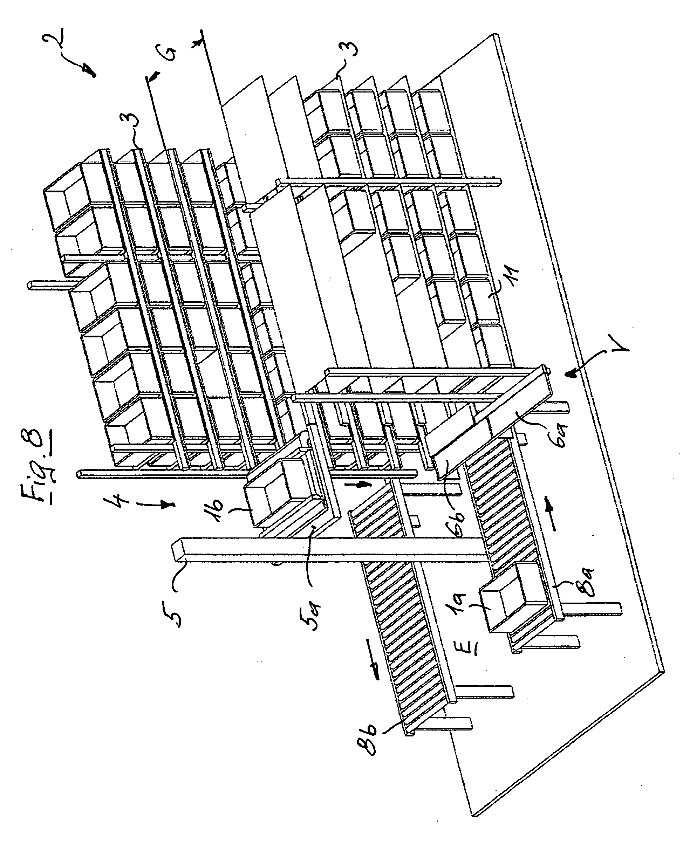

In der in den Figuren 8 bis 17 dargestellten erfindungsgemäßen Ausführungsvariante ist die Be- und Entladevorrichtung V ein erster und ein zweiter Schieber 6a, 6b, die jeweils dem ersten und zweiten Förderer 8a, 8b endseitig zugeordnet sind und eine Querverschiebung eines platzierten Behälters ermöglichen. Beide Schieber 6a, 6b sind als Doppelschieber ausgebildet, der ein gleichzeitiges Ein- und Ausschieben eines auf dem ersten Förderer 8a angeförderten Behälters la bzw. auf dem zweiten Förderer 8b abzufördernden Behälters 1b ermöglicht. Erster und zweiter Schieber 6a, 6b besitzen einseitig wirkende Schiebeelemente, die bei einem Rückhub hochklappbar sind.

## Patentansprüche

1. Verfahren zum Ein- und Auslagern von Behältern (1a, 1b) in ein oder aus einem Lagerregal (2) mit übereinander angeordneten Lagerregalebenen (3), in denen die Behälter über Einebenenregalbediengeräte in Form von schienengebundenen angetriebenen autonomen Satellitenfahrzeugen (4) ein- und auslagerbar und von und zu einem Lift (5) vorzugsweise in einer Lagerregalgasse (G) horizontal verfahrbar sowie samt Satellitenfahrzeug im Lift auf zumindest eine Fördertechnikebene (E) im Bereich des Lagerregals vertikal versetzbar sind, wobei die auf der Fördertechnikebene an- und abgeförderten Behälter auf die Satellitenfahrzeuge in Höhe der Fördertechnikebene beladen und entladen werden,
**dadurch gekennzeichnet,**
**dass** in Höhe der Fördertechnikebene (E) die Be- und Entladung des Satellitenfahrzeugs (4) eine außerhalb des Satellitenfahrzeugs angeordnete vorzugsweise stationäre Be- und Entladevorrichtung (V) übernimmt, und
**dass** in Höhe der Fördertechnikebene (E) die Beladung des angeförderten Behälters (1a) und die Entladung des abzufördernden Behälters (1b) auf das bzw. vom Satellitenfahrzeug (4) zeitgleich durch einen einzigen Doppelschieber in Form eines ersten und zweiten verstellbaren Schiebers (6a, 6b) erfolgt, wobei der erste Schieber (6a) zum Beladen des Satellitenfahrzeugs (4) mit einem positionierten Behälter (1a) , der auf einem ersten Förderer (8a) auf der Fördertechnikebene (E) anförderbar ist, vorgesehen ist und der zweite Schieber (6b) zum Entladen eines positionierten Behälters (1b) vom Satellitenfahrzeug (4) zeitgleich zum Beladen eines neuen angeförderten Behälters (1a) vorgesehen ist, wobei der entladene Behälter (1b) auf einem zweiten Förderer (8b) auf der Fördertechnikebene (E) abförderbar ist.

2. Verfahren nach einem der Ansprüche 1 bis 3,
**dadurch gekennzeichnet,**
**dass** die Be- und Entladevorrichtung (V) von der Fördertechnikebene (E) zu einer anderen Fördertechnikebene im Lift (4) vertikal versetzt oder verfahren wird.

3. System zum Ein- und Auslagern von Behältern (1a, 1b) in ein oder aus einem Lagerregal (2) mit übereinander angeordneten Lagerregalebenen (3), in denen die Behälter über Einebenenregalbediengeräte in Form von schienengebundenen angetriebenen autonomen Satellitenfahrzeugen (4) ein- und auslagerbar und von und zu einem Lift (5) vorzugsweise in einer Lagerregalgasse (G) horizontal verfahrbar sowie samt Satellitenfahrzeug im Lift auf zumindest eine Fördertechnikebene (E) im Bereich des Lagerregals vertikal versetzbar sind, wobei die auf der Fördertechnikebene an- und abgeförderten Behälter auf die Satellitenfahrzeuge in Höhe der Fördertechnikebene (E) beladen und entladen werden, nach Anspruch 1 oder 2,
**dadurch gekennzeichnet,**
**dass** die außerhalb des Satellitenfahrzeugs (4) in Höhe der Fördertechnikebene (E) gelegene Be- und Entladevorrichtung (V) zum Be- und Entladen des Satellitenfahrzeugs (4) fest auf der Fördertechnikebene (E) oder fest auf der Liftplattform (5a) des Lifts (5) befestigt ist, wobei für ein zeitgleiches Be- und Entladen ein erster und ein zweiter verstellbarer Schieber (6a, 6b) vorgesehen und als ein einziger Doppelschieber ausgebildet sind, wobei der erste Schieber (6a) zum Beladen des Satellitenfahrzeugs (4) mit einem positionierten Behälter (1a) , der auf einem ersten Förderer (8a) auf der Fördertechnikebene (E) anförderbar ist, vorgesehen ist der zweite Schieber (6b) zum Entladen eines positionierten Behälters (1b) vom Satellitenfahrzeug (4) zeitgleich zum Beladen eines neuen angeförderten Behälters (1a) vorgesehen ist, wobei der entladene Behälter (1b) auf einem zweiten Förderer (8b) auf der Fördertechnikebene (E) abförderbar ist.

4. System nach Anspruch 3,
**dadurch gekennzeichnet,**
**dass** die Be- und Entladevorrichtung (V) von der Fördertechnikebene (E) zu einer anderen Fördertechnikebene vertikal versetzbar ist.

5. System nach einem der Ansprüche 3 bis 4,
**dadurch gekennzeichnet,**
**dass** das Satellitenfahrzeug (4) ein Lastaufnahmemittel mit angetriebener Rollenfördertechnik (9) aufweist, welche gegebenenfalls das Be- und Entladen des Satellitenfahrzeugs (4) in Höhe der Fördertechnikebene (E) unterstützt.

6. System nach einem der Ansprüche 3 bis 5,
**dadurch gekennzeichnet,**
**dass** das Satellitenfahrzeug (4) ein Lastaufnahmemittel mit zumindest einem Teleskoparm (10) für ein Ein- und Auslagern eines Behälters in oder aus einem in einer Lagerregalebene (3) des Lagerregals (2) gelegenen Lagerfach (11) aufweist.

7. System nach Anspruch 6,
**dadurch gekennzeichnet,**
**dass** durch den Teleskoparm (10) auch die Entladung eines abzufördernden Behälters (1b) vom Satellitenfahrzeug (4) in Höhe der Fördertechnikebene (E) erfolgen kann, wenn das Satellitenfahrzeug nicht mit einem neuen Behälter beladen ist.

## Claims

1. Method for loading and retrieving containers (1a, 1b) into or from a storage rack (2) with storage rack levels (3), which are arranged one on top of another and in which the containers can be loaded and from which they can be retrieved via single-level bay storage and retrieval units in the form of rail-borne, driven, autonomic satellite vehicles (4) and can displaced horizontally from and to an elevator (5) preferably in a storage rack aisle (G) and displaced vertically together with the satellite vehicle in the elevator to at least one elevator level (E) in the area of the storage rack, wherein the containers delivered and removed on the elevator level are loaded onto and unloaded from the satellite vehicles at the level of the elevator level,
**characterized in that**
the loading and unloading of the satellite vehicle (4) is assumed at the level of the elevator level (E) by a preferably stationary loading and unloading device (V) arranged outside the satellite vehicle, and the loading of the container (1a) delivered and the unloading of the container (1b) to be removed onto and from the satellite vehicle (4) take place simultaneously at the level of the elevator level (E) by a single double pusher in form of a first and a second displaceable pushers (6a, 6b) wherein the first pusher (6a) is provided for loading the satellite vehicle (4) with a positioned container (1a), which can be delivered on a first conveyor (8a) on the elevator level (E), and the second pusher (6b) is provided for unloading a positioned container (1b) from the satellite vehicle (4) simultaneously with the loading of a new container (1a) delivered, wherein the unloaded container (1b) can be removed on a second conveyor (8b) on the elevator level (E).

2. Method in accordance with claim 1,
**characterized in that**
the loading and unloading device (V) is vertically transferred or moved from the elevator level (E) to another elevator level in the elevator (4).

3. System for loading and retrieving containers (1a, 1b) into or from a storage rack (2) with storage rack levels (3), which are arranged one on top of another and into which the containers can be loaded and from which they can be retrieved via single-level bay storage and retrieval units in the form of rail-borne, driven, autonomic satellite vehicles (4) and displaced horizontally from and to an elevator (5) preferably in a storage rack aisle (G) and displaced vertically together with the satellite vehicle in the elevator to at least one elevator level (E) in the area of the storage rack, wherein the containers delivered and removed on the elevator level are loaded onto and unloaded from the satellite vehicle at the level of the elevator level (E), in accordance with claim 1 or 2,
**characterized in that**
the loading and unloading device (V) located outside the satellite vehicle (4) at the level of the elevator level (E) for loading and unloading the satellite vehicle (4) is rigidly fastened on the elevator level (E) or is rigidly fastened on the elevator platform (5a) of elevator (5) wherein a first and a second displaceable pushers (6a, 6b) are designed as a single double pusher for simultaneous loading and unloading, and wherein the first pusher (6a) is provided for loading the satellite vehicle (4) with a positioned container (1a), which can be delivered on a first conveyor (8a) on the elevator level (E), and the second pusher (6b) is provided for unloading a positioned container (1b) from the satellite vehicle (4) simultaneously with the loading of a new container (1a) delivered, wherein the unloaded container (1b) can be removed on a second conveyor (8b) on the elevator level (E).

4. System in accordance with claim 3,
**characterized in that**
the loading and unloading device (V) can be vertically displaced from the elevator level (E) to another elevator level.

5. System in accordance with one of the claims 3 through 4,
**characterized in that**
the satellite vehicle (4) has a load pick-up means with driven roller conveyor system (9), which optionally supports the loading and unloading of the satellite vehicle (4) at the level of the elevator level (E).

6. System in accordance with one of the claims 3 through 5,
**characterized in that**
the satellite vehicle (4) has a load pick-up means with at least one telescopic arm (10) for loading and retrieving a container into or from a storage compartment (11) located in the storage rack level (3) of the storage rack (2).

7. System in accordance with claim 6,
**characterized in that**
the unloading of a container (1b) to be removed from the satellite vehicle (4) at the level of the elevator level (E) can also be carried out by the telescopic arm (10), if the satellite vehicle is not loaded with a new container.

## Revendications

1. Procédé permettant de stocker des conteneurs (1a, 1b) dans un rayonnage (2) et de les extraire de ce dernier, ledit rayonnage étant doté de plans de rayonnage (3) disposés les uns au-dessus des autres dans lesquels les conteneurs peuvent être mis en stock et sortis de stock par le biais d'appareils de commande d'étagère monoplan prenant la forme de chariots satellites (4) autonomes entraînés reliés à des rails et pouvant être déplacés de façon horizontale en direction et en provenance d'un système de levage (5) de préférence dans un couloir de rayonnage (G) ainsi que pouvant être décalés à la verticale dans la région du rayonnage, conjointement avec le chariot satellite, dans le système de levage, sur au moins un plan technique de transport (E), les conteneurs amenés et évacués sur le plan technique de transport étant chargés et déchargés sur les chariots satellites à hauteur du plan technique de transport,
**caractérisé en ce que**
à hauteur du plan technique de transport (E), le chargement et déchargement du chariot satellite (4) est réalisé par un dispositif de chargement et déchargement (V) de préférence stationnaire disposé à l'extérieur du chariot satellite, et
à hauteur du plan technique de transport (E), le chargement du conteneur (1a) amené et le déchargement du conteneur (1b) à évacuer se produit sur le chariot satellite (4) et/ou par lui simultanément par le biais d'un double système-poussoir unique prenant la forme d'un premier et d'un deuxième système-poussoir mobile (6a, 6b),
le premier système-poussoir (6a) étant prévu pour charger le chariot satellite (4) avec un conteneur (1a) positionné pouvant être amené sur un premier système de transport (8a) placé sur le plan technique de transport (E) et le deuxième système-poussoir (6b) étant prévu pour décharger hors du chariot satellite (4) un conteneur (1b) positionné simultanément pour charger un nouveau conteneur (1a) amené, le conteneur (1b) déchargé pouvant être évacué sur un deuxième système de transport (8b) placé sur le plan technique de transport (E).

2. Procédé selon la revendication 1,
**caractérisé en ce que**
le dispositif de chargement et déchargement (V) est décalé ou déplacé verticalement du plan technique de transport (E) vers un autre plan technique de transport dans le système de levage (4).

3. Système permettant de stocker des conteneurs (1a, 1b) dans un rayonnage (2) et de les extraire de ce dernier, ledit rayonnage étant doté de plans de rayonnage (3) disposés les uns au-dessus des autres dans lesquels les conteneurs peuvent être mis en stock et sortis de stock par le biais d'appareils de commande d'étagère monoplan prenant la forme de chariots satellites (4) autonomes entraînés reliés à des rails et pouvant être déplacés de façon horizontale en direction et en provenance d'un système de levage (5) de préférence dans un couloir de rayonnage (G) ainsi que pouvant être décalés à la verticale dans la région du rayonnage, conjointement avec le chariot satellite, dans le système de levage, sur au moins un plan technique de transport (E), les conteneurs amenés et évacués sur le plan technique de transport étant chargés et déchargés sur les chariots satellites à hauteur du plan technique de transport,
**caractérisé en ce que**
le dispositif de chargement et déchargement (V) du chariot satellite (4), placé à l'extérieur du chariot satellite (4) à hauteur du plan technique de transport (E), est fixé fixement sur le plan technique de transport (E) ou fixement sur la plateforme de levage (5a) du système de levage (5),
un premier et un deuxième système-poussoir (6a, 6b) mobiles étant prévus pour un chargement et un déchargement simultanés et prenant la forme d'un système-poussoir unique,
le premier système-poussoir (6a) étant prévu pour charger le chariot satellite (4) avec un conteneur (1a) positionné pouvant être amené sur un premier système de transport (8a) placé sur le plan technique de transport (E) et le deuxième système-poussoir (6b) étant prévu pour décharger hors du chariot satellite (4) un conteneur (1b) positionné simultanément pour charger un nouveau conteneur (1a) amené, le conteneur (1b) déchargé pouvant être évacué sur un deuxième système de transport (8b) placé sur le plan technique de transport (E).

4. Système selon la revendication 3,
**caractérisé en ce que**
le dispositif de chargement et déchargement (V) peut être décalé verticalement d'un plan technique de transport (E) à un autre plan technique de transport.

5. Système selon l'une quelconque des revendications 3 à 4,
**caractérisé en ce que**
le chariot satellite (4) comporte un moyen de réception de charge équipé d'un système technique de transport par rouleaux (9) entraîné aidant le cas échéant au chargement et déchargement du chariot satellite (4) à hauteur du plan technique de transport (E).

6. Système selon l'une quelconque des revendications 3 à 5,
**caractérisé en ce que**
le chariot satellite (4) comporte un moyen de réception de charge doté d'au moins un bras télescopique (10) permettant de stocker un conteneur dans un casier de stockage (11) placé dans un plan de rayonnage (3) du rayonnage (2) et de l'en extraire.

7. Système selon la revendication 6,
**caractérisé en ce que**
le déchargement d'un conteneur (1b) à évacuer du chariot satellite (4) peut également se produire à hauteur du plan technique de transport (E) par le biais du bras télescopique (10) lorsque le chariot satellite n'est pas chargé d'un nouveau conteneur.
